# EUROPEAN PATENT SPECIFICATION

(11) **EP 2 620 245 B1**
(45) Date of publication and mention of the grant of the patent: **01.03.2017**
(21) Application number: 13000316.3
(22) Date of filing: 22.01.2013
(51) Int. Cl.: B23D 45/06, B27B 5/18, B23Q 11/08, F16J 15/16

(54) **Cutting machine**
Schneidmaschine
Machine de coupe

(30) Priority: 24.01.2012 IT BO20120026
(43) Date of publication of application: 31.07.2013
(73) Proprietor: Naldi, Valter, 40137 Bologna (IT)
(72) Inventor: Naldi, Valter, 40137 Bologna (IT)

(56) References cited:
- EP-A1- 1 716 955
- EP-A1- 2 210 719
- AT-B- 403 263
- DE-U1- 7 923 659
- GB-A- 2 177 653

## Description

The present invention relates to a cutting machine according to the preamble of claim 1. Such a machine is known from AT403263B1

As known, cutting machines relating to the present invention comprise a saw carriage, which is horizontally mobile along a guiding base supporting the panels to be cut. On the upper machine part, a robust pressing unit is provided in order to firmly clamp the panels during the cutting operation and to avoid an even minimal movement thereof. This clamping operation, on both sides of the cutting line, is essential to obtain a good quality of cut and a good precision in the sizing of the cut panels.

The saw blade unit, besides having a horizontal translation movement provided by said saw carriage, is also provided with a vertical movement in order to allow both saw blades, usually one cutting blade or circular blade and one scorer, to protrude from the working table only during the cutting operation, when the panels are clamped by the upper pressing system.

During the return stroke of the saw carriage to the initial position, in order to repeat the cutting cycle, the saw blade unit is lowered below the working table, so as to allow the simultaneous panel repositioning that is usually carried out by means of pushing devices (automated and known) provided with panel clamping grippers

As known, during the cutting operation, off-cuts can be produced, usually during the trimming operation on the four external sides of the panels to be cut, and, if said off-cuts are of small dimensions, they can penetrate through the cutting slot, which is usually a few millimeters wide, into the cutting machine, thus creating considerable malfunctions of the machine itself due to various internal organ failures.

By way of example, in order to solve this problem, patent AT 403 263 B discloses a system for partially closing the cutting slot, which is orthogonal to the cutting direction and operates by moving special closing strips, which are positioned on the working table.

These closing strips are moved during the passage of the saw carriage by means of a relative cam, which is mounted on the saw carriage itself. Therefore, when the saw carriage is moving by, only the special closing strips that are arranged in correspondence to its position are operated, thus preventing them, during the cutting operation, from getting in contact with the saw blades; these closing strips will be immediately re-arranged in the closing position as soon as the saw carriage has moved past them.

Obviously, this movement of the closing strips must occur during the cutting operation and, therefore, with the stack of panels clamped on the upper surface of the working table by means of the upper pressing unit. Obviously, furthermore, these special closing strips must have a thickness that prevents them from being locked and, therefore, their upper profile must necessarily be slightly lower than said upper surface of the working table.

This implies that only a few closing strips can be positioned along the cutting line at more or less regular intervals, since the portion of the working table involved in the firm clamping of the panels must be greatly predominant with respect to the portions of the working table involved in the housing of the special mobile closing strips.

In recently manufactured machines, the movement of the panels is performed by using special clamping grippers whose lower fingers, usually two per each gripper, need grooves on the working table for their passage. It is therefore obvious that these special closing strips cannot be positioned in the immediate vicinity of these grooves and, therefore, the more the panel clamping grippers are used in the panel pushing devices, the less the cutting line closing strips can be used, thus remarkably limiting their final function, which is to prevent thin and short off-cuts from dropping into the cutting slot itself.

Therefore, the main object of the present invention is to provide a cutting machine, in which the cutting slot closing devices are free from the drawbacks described above.

Therefore, according to present invention, a cutting machine having the features of claim 1 is provided . Further preferred embodiments are defined by the dependent claims 2-15.

For a better understanding of the present invention, a preferred nonlimiting embodiment of the present invention will now be described by way of example with reference to the accompanying drawings, in which:
- figure 1 shows a plan view of a cutting machine, on which an equipped working table that represents the main subject-matter of the present invention is mounted;
- figure 2 shows a front view of the cutting machine of figure 1;
- figure 3 shows a cross section of the equipped working table, in which a cutting slot closing device assumes a first configuration (opening configuration of the cutting slot);
- figure 4 shows a cross section of figure 3, in which the cutting slot closing device according to figure 3 assumes a second configuration (closing configuration of the cutting slot);
- figure 5 shows a plan view of a portion of an equipped working table provided with a plurality of cutting slot closing devices according to the present invention;
- figure 6 shows a front view of the portion of the equipped working table shown in figure 5;
- figure 7 shows a plan view of a closing device according to the invention;
- figure 8 shows an A-A section view of the device of figure 7 with parts removed for a better comprehension of the accompanying drawings;
- figure 9 shows a plan view of a detail of the closing device according to figures 7, 8; and
- figure 10 shows three different configurations of the closing device according to figures 7, 8, 9; in particular:
   - figure 10A shows a first configuration, in which the closing member is arranged in a retracted position so as to allow the passage of the scoring and cutting blade, which are performing a cutting operation on a stack of panels and are arranged in direct correspondence to the closing member itself;
   - figure 10B shows a second configuration, in which the closing member is arranged in an extracted position and closes the cutting slot; in this case the saw blades do not interfere with the closing member itself; and finally
   - figure 10C shows a third configuration, in which the saw carriage is performing its return stroke and is arranged in direct correspondence to the closing device; in this case the closing member continues to be in its extracted position, since, during said return stroke, the saw blades are lowered and, therefore, cannot interfere with the closing member.

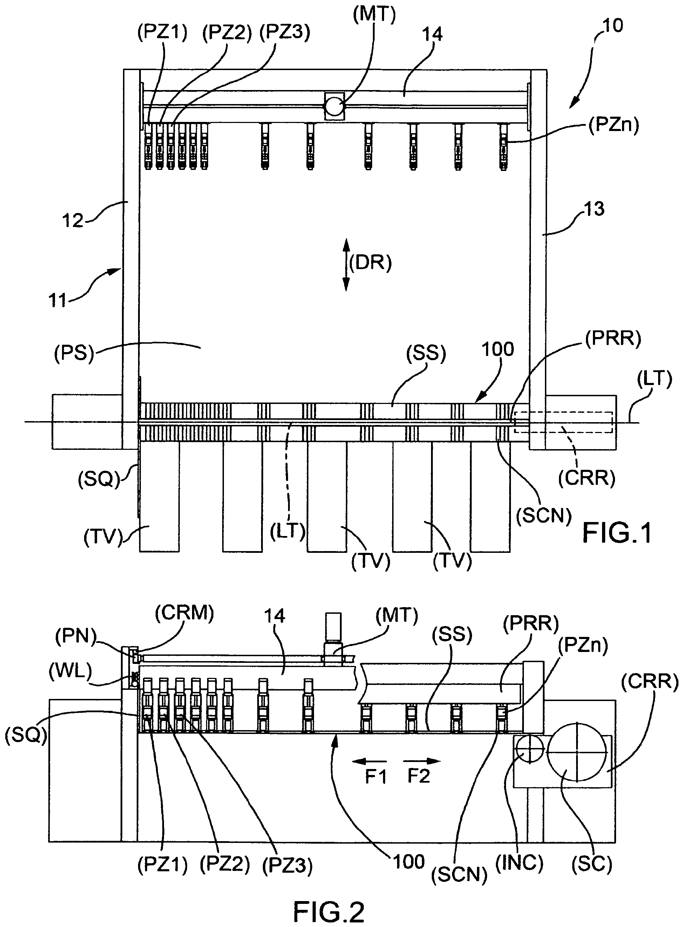

In figures 1, 2, number 10 indicates, as a whole, a cutting machine that is the subject-matter of the present invention. An equipped working table 100 is mounted on said cutting machine 10.

The cutting machine 10 comprises a support structure 11, said working table 100 and a saw blade carriage (CRR), the latter being provided, as usual, with a scorer (INC), which is not essential, and with a circular blade (SC). Said saw blades (INC, SC) project from an upper surface (SS) of the working table 100 only during the cutting operation, which is performed according to a direction represented by arrow F1 (figure 2), when the stack of panels (not shown) is pressed by a pressing unit (PRR) acting on both sides of a cutting line (LT) against the upper surface (SS) of the equipped working table 100.

For the purpose of the present invention, the "upper surface (SS) of the equipped working table 100" is the surface of the table itself and, therefore, the surface of each one of its components that is physically in contact with the lower face of a single panel or of the stack of panels to be cut and that also constitutes its support during the pressing action of the pressing unit (PRR).

Said pressing unit (PRR) performs its active pressing action, by clamping the panel or the stack of panels, over the entire length of the equipped working table 100.

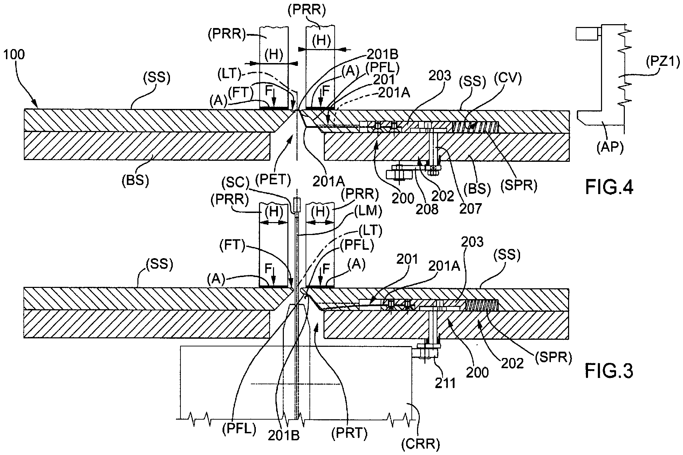

The pressing unit (PRR), therefore, exerts a clamping force (F) (figures 3, 4) by means of two vertical plates having a given width (H), each one placed on each side of the saw blades (INC), (SC) (figures 1, 2, 3, 4).

The panel clamping force (F), having a value of some hundreds kg, is exerted by the pressing unit (PRR) over an area (A) of the upper surface (SS) belonging to the equipped working table 100 (figures 3, 4).

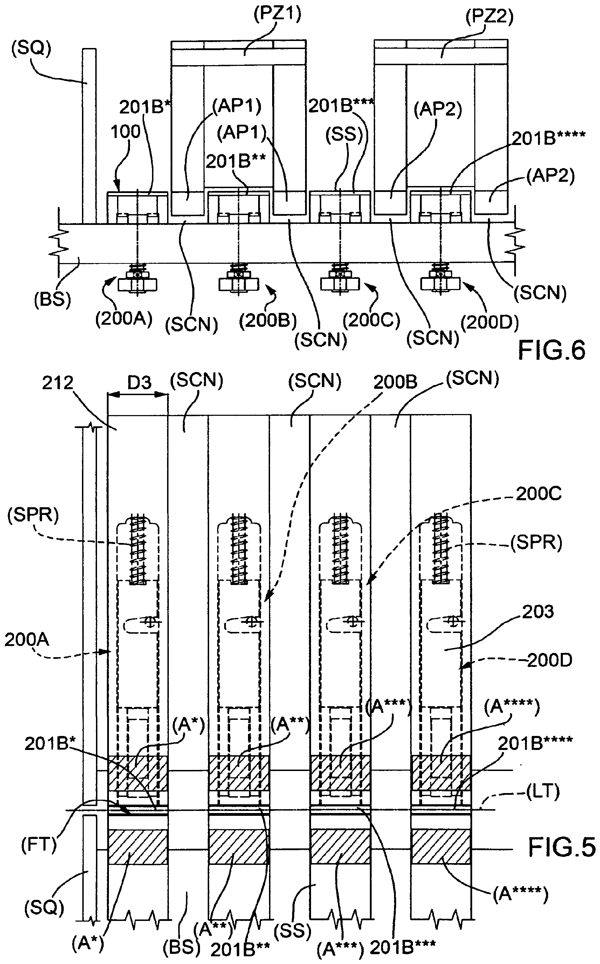

Or in better terms, as shown in figure 5, said clamping force (F) is also exerted on a plurality of areas (A*), (A**), (A***), (A****) of the upper surface (SS) belonging to the equipped working table 100 (figures 5, 6), which are adjacent to a cutting slot (FT) lying over the cutting line (LT). In particular, each single area (A*), (A**), (A***), (A****) is contained in a part of the upper surface (SS) of a portion of the equipped working table 100 having, for example, the shape of a strip 212.

Moreover, said clamping force (F) does not cause any deformation of the equipped working table 100, since each member of said working table 100 is duly dimensioned during the design phase.

During the return stroke of the saw carriage (CRR), according to a direction represented by an arrow (F2) (figure 2), to the initial position in order to repeat the cutting cycle, said saw blades (INC, SC) are lowered below the upper surface (SS) by means of known means, which are not shown.

The support structure 11 comprises two lateral supports 12, 13, which support the wheels (WL) (only one is visible in figure 2) of a cross pusher carriage 14, which is suited to position the panels to be cut (not shown) and bears a plurality of grippers (PZ1), (PZ2), (PZ3),...(PZn), which are distributed along the pusher carriage 14 itself.

In particular it should be noted that, with reference to figures 5, 6, the grippers (PZ1), (PZ2) are arranged side by side without discontinuity in the area next to a square fence (SQ). This is necessary due to the fact that, in this area of the cutting machine 10, panel strips (not shown), which can be very narrow, are cut crosswise and, therefore, need a plurality of grippers close to each other in order to be simultaneously moved and cut. Moreover, it must be noted that each gripper (PZ1), (PZ2) is respectively provided with two lower jaws (AP1), (AP2).

The cross pusher carriage 14, which is supported by wheels (WL), is provided with a central drive motor (MT), which causes lateral pinions (PN) (only one is visible in figure 2) to rotate, each one of said lateral pinions (PN) being engaged with a respective rack (CRM) (figure 2). The rotation of the pinions (PN) allows the entire cross pusher carriage 14 to move according to the two directions indicated by a double-headed arrow (DR). This allows the stack of panels to move on the upper surface (SS) to and from a transverse cutting line (LT), which is associated to the cutting slot (FT), along which the scorer (INC) and the circular blade (SC) run during the active cutting phase.

The cutting machine 10 is also provided with projecting tables (TV), a support table (PS) and the lateral square fence (SQ).

The working table 100 (as well as the support table (PS)), as mentioned above, is provided with a series of grooves (SCN), which allow the passage of respective grippers (PZ1), (PZ2), (PZ3),...(PZn) (see also figure 6).

In a known manner and with reference to figures 3, 4, the equipped working table 100 comprises, as already mentioned, the upper surface (SS) supporting the stack of panels (not shown). Said upper surface (SS) is divided into two portions by the theoretical cutting line (LT), which corresponds to the central axis (LM) of the circular blade (SC) (figure 3) and to the central axis (not shown) of the scorer (INC). Actually, the cutting line (LT) is surrounded by the cutting slot (FT), which is a few millimeters wide and takes into account the actual thickness of the saw blades.

The equipped working table 100 is fixed to a support base (BS) with known means, which are not shown.

The continuity of said equipped working table 100 is interrupted by the grooves (SCN) for the passage of the lower jaws (AP), (AP1), (AP2) of the grippers (figures 1, 2, 5, 6). In particular, it should be pointed out that, due to the grooves (SCN), the equipped working table 100, in the area next to the square fence (SQ), generally consists of narrow support surfaces, which are shaped as narrow strips that are orthogonal to the cutting line (LT), alternated in close sequence with the series of grooves (SCN). The grooves (SCN) on the working table can also be used to house different devices that are necessary for the operation of the cutting machine.

The equipped working table 100 comprises at least one closing device 200 for closing the cutting slot (FT).

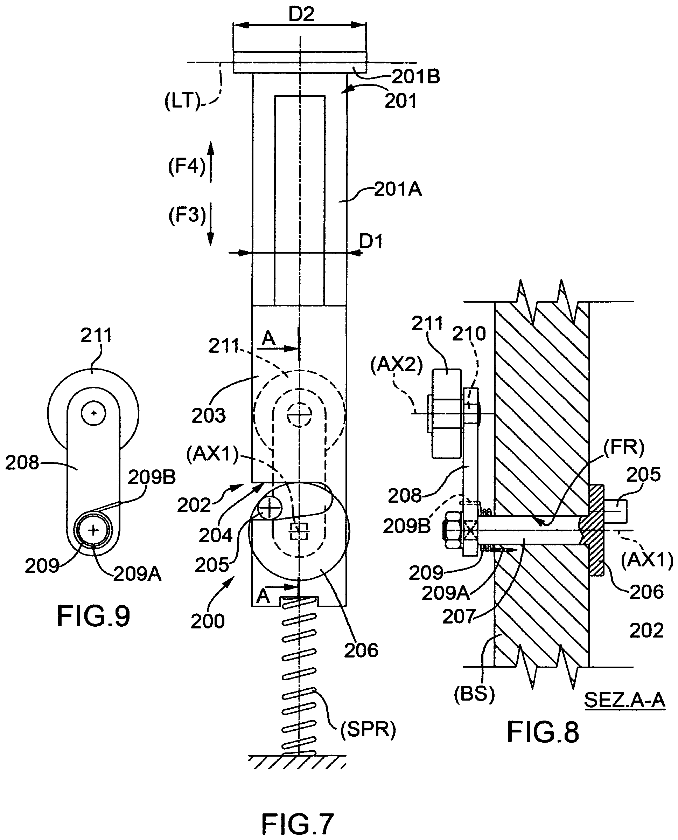

As shown in detail in figure 7, the closing device 200 comprises a closing member 201 for closing the cutting slot (FT) and an actuating device 202 for actuating the closing member 201 itself.

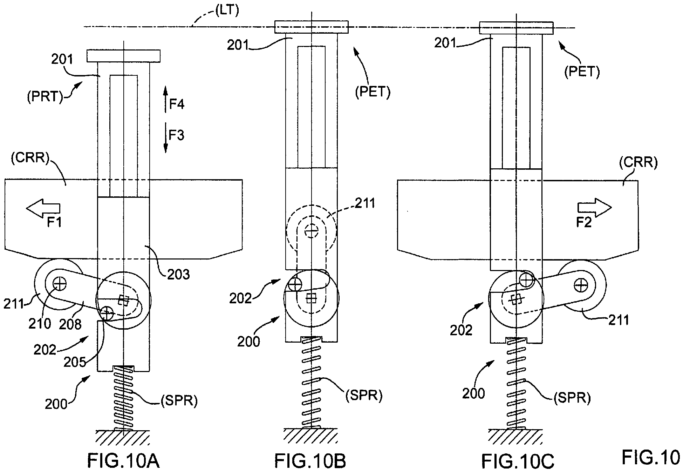

As also shown in figure 10, the actuating device 202 is suited to cause the closing member 201 to cover a substantially straight path according to the two directions represented by arrows F3, F4, thus causing it to move from a retracted position (PRT) (figures 3, 10A) to an extracted position (PET) (figures 4, 5, 7, 10B, 10C), and vice versa.

Figure 7 shows that the closing member 201 advantageously comprises a main body 201A with width D1, which is associated to a head 201 B, which is suited to close the cutting slot (FT) with width D2.

Incidentally, it should be pointed out that, for the purpose of the present invention, the "head 201 B" is the end portion of the closing member 201, which is suited to physically close the cutting slot (FT) (figures 4, 5). Moreover, the head 201 B faces the cutting line (LT).

Advantageously, but not necessarily, the width D2 of the head 201B is larger than the width D1 of the main body 201A, or, if necessary, it is larger than the entire closing device 200, so that said head 201 B can close a longer section of the cutting slot (FT).

The closing member 201 can be made of a deformable elastic foil, using, for example, spring steel.

In the embodiment shown in figures 3, 4, 5, the entire actuating device 202 and at least part of the closing member 201 are arranged in a slot (CV), which is obtained in a known manner between the upper surface (SS) of the equipped working table 100 and a base (BS), for example on the inside of the special strip 212 having width (D3), which is arranged between two adjacent grooves (SCN) eventually housing the lower jaws (AP1), (AP2) that are respectively relative to the same gripper (PZ1), (PZ2). The head 201 B of the closing member 201 could advantageously have a width D2 that is equal or, if necessary, even larger than the width D3 of the special strip 212, which could house the closing member 201 or the entire closing device 200.

The special strip 212 having width (D3), which is part of the equipped working table 100 and, therefore, has the same upper surface (SS), can be individually fixed to the base (BS) or can be contained in a portion of the equipped working table 100 that is fixed to base (BS). In the latter case, a plurality of strips 212 having width (D3) can be comprised in the same working table portion that is fixed to the base (BS).

When the head 201 B of the closing member 201 is arranged in the retracted position (PRT) (figure 3), it is covered by the upper surface (SS) of the equipped working table 100. It should be pointed out that, when the head 201 B of the closing member 201 is arranged in its retracted position (PRT), it could also be only partially covered by the upper surface (SS) of the equipped working table 100, without for this reason going beyond the scope of protection of the present invention, since all the advantages of the present solution would still be valid. In other words, said upper surface (SS) of the equipped working table 100 supporting the panel or the stack of panels could be completely or only partially arranged over the head 201 B of said closing member 201 when the closing member 201 itself is arranged in a retracted position (PRT).

Moreover, when the closing member 201 is arranged in the retracted position (PRT) (figure 3), there is no portion of the closing member 201 itself that could come in contact, even accidentally, with a panel, with a stack of panels, with a gripper and, evidently, with the scorer (INC) or the circular blade (SC).

As shown in figures 3, 4, the edge of the equipped working table 100 and, therefore, the edge belonging to the special strip 212 arranged in correspondence to the slot (CV), can be advantageously shaped as a guiding profile (PFL), which, in use, is coupled to the head 201 B of the closing member 201.

When the actuating device 202 pushes the entire closing member 201 forward, the head 201 B of the closing member 201 itself, following the guiding profile (PFL), closes its portion of the cutting slot (FT), thus substantially reaching the same level as the upper surface (SS) of the equipped working table 100 (figure 4). The adhesion of the head 201 B to the profile (PFL) is always guaranteed by the elasticity of the foil of which closing member 201 is made.

In other words, the head 201 B follows a path comprising a first horizontal section followed by a second raising section, so as to close a corresponding portion of the cutting slot (FT), substantially reaching the same level as the upper surface (SS) of the equipped working table 100.

In a further embodiment (not shown), the closing member may be rigid instead of being elastic. In this case the head of the closing member or, in any case, the final portion of the closing member, which is suited to physically close the cutting slot, in order to reach the same level as the upper surface of the equipped working table, has to be provided with kinematic motions with cams or levers. As an alternative, in the absence of said kinematic motions, the head of the closing member or, in any case, the final portion of the closing member, which is suited to physically close the cutting slot, will be arranged, in its extracted position, slightly below the upper surface of the equipped working table 100.

In the alternative solutions suggested, the closing device 200 (or, if necessary, the sole closing member 201) can in any case be partially or completely housed and/or guided in the special strip 212 with the upper surface (SS), which is interposed between two adjacent grooves, which, if necessary, can be provided for the same gripper.

As shown in figures 3, 4, 5, 7, 10, the actuating device 202 comprises, in turn, a sliding cursor 203, which, by means of known means, is caused to be integral to the closing member 201. Said sliding cursor 203 is pushed by a spring (SPR) presenting an end that rests against a side wall of the slot (CV), and is provided with a profiled slot 204, in which a pin 205 is engaged, which, in turn, is integral to a disc 206 (figures 7, 8). The disc 206 is fitted to a shaft 207 with a fixed axis (AX1), which is at least partially contained, in a through hole (FR) obtained in base (BS).

As explained in detail below, the shaft 207 can rotate about the fixed axis (AX1) in such a way that the disc 206 and the pin 205 rotate in same direction as well, thus forcing the sliding cursor 203 to move according to an arrow (F3) (figure 10A). In other words, the rotating movement of the pin 206 is converted into the linear movement of the sliding cursor 203 and of the closing member 201.

As shown in particular in figures 3, 4, 8, a link rod 208, which is integral to the shaft 207, is provided below the base (BS), one end of said link rod 208 being subject to the action of a spring 209, which is partially wound around the shaft 207. A first end 209A of the spring 209 is integral to the base (BS), while a second end 209B thereof is fixed to the link rod 208. At the opposite end of the link rod 208, which is not integral to the shaft 207, there is a pin 210, which can freely rotate about an axis (AX2), to which a roller 211 is fixed, which, therefore, is also able to freely rotate about the axis (AX2).

As shown in figures 3, 10A, 10C, said roller 211 can come in contact with the saw carriage (CRR) or, in a further embodiment not shown in the figures, with a cam with a proper length, which is fixed to the saw carriage (CRR) itself, both during the cutting stroke (figure 10A) and during the return stroke (figure 10C).

With reference to figure 10A, when the pin 205 pushes the sliding cursor 203 in the direction represented by arrow F3, the spring (SPR) is loaded. Therefore, in the configuration shown in figure 10A, the closing member 201 is arranged in its retracted position and moves aside from the cutting slot (FT), thus allowing the passage of the scorer (INC) and of the circular blade (SC).

When the closing member 201 is arranged in this position, the scorer (INC) and the circular blade (SC) can respectively perform, in correspondence to that particular closing member 201, the scoring and cutting operation on the stack of panels (not shown), which is arranged on top of the cutting slot (FT).

Once the saw carriage (CRR) has passed by (figure 10B), there is no more contact between the roller 211 and the saw carriage (CRR).

For this reason, due to the action of the spring (SPR) in the direction indicated by arrow (F4), the device assumes the configuration shown in figure 10B, that is with the closing member 201 in the extracted position (PET).

During the return stroke of the saw carriage (CRR), with the saw blades lowered and according to a direction represented by arrow (F2), the roller 211 comes again in contact with the saw carriage (CRR) itself, but, in this case, the pin 205 rotates in an idle manner in the profiled slot 204, thus leaving the position of the sliding cursor 203 and, therefore, of the closing member 201 (which closes the cutting slot (FT)) unchanged. In this third configuration of figure 10C, the loading of the spring 209 takes place as well.

As soon as the saw carriage (CRR) has moved beyond the specific closing member 201, the roller 211 gets back to the position shown in figure 10B thanks to the action of the spring 209.

Therefore, as shown in the figures, the specific closing member 201 is arranged in its retracted position (PRT) only when the two following conditions are simultaneously met:
f1) the scorer (INC) and the circular blade (SC) are cutting the stack of panels; and
f2) the scorer (INC) and the circular blade (SC) are arranged exactly in correspondence to that specific closing member 201 (figure 10A).

Moreover, the same closing member 201 is arranged in its extracted position (PET) in all the other situations that have not been considered in the previous paragraph.

In particular, the saw carriage (CRR) can immediately perform its return stroke, even if the off-cuts have not been previously removed from the upper surface (SS) of the equipped working table 100 and, more in particular, from their possible position on top of the cutting slot (FT), since the closing members 201 thereof remain in any case in the extracted position (PET).

The idle actuating device described above for the return stroke of the saw carriage is definitely functional for all those cutting machines, in which there is provided a fixed starting position of the saw carriage itself during the cutting phase.

An alternative to the idle actuating device described above for the return stroke of the saw carriage (not shown) is represented by a mobile cam with a proper length, which is fixed to the saw carriage (CRR) and can assume two positions:
- a first extracted position, which is activated only during the cutting phase and in which said mobile cam comes in contact with an actuating roller in order to place a closing member in a retracted position; and
- a second rest and retracted position, which is activated during the return stroke of the saw carriage and in which said mobile cam does not come in contact with said actuating roller, thus leaving the closing member in the extracted position.

As shown in figures 5, 6, the equipped working table 100, in the case in point, the one near the square fence (SQ), can be provided with a plurality of closing devices 200A, 200B, 200C, 200D, which are activated in sequence as a function of the passage of the saw carriage (CRR), only when the two above-mentioned conditions listed under f1 and f2 are simultaneously met.

Moreover, said figures 5, 6 show that the closing devices 200A, 200B, 200C, 200D can be arranged between several grooves placed in close sequence, so as to allow the installation of several grippers (PZ1, PZ2) in the area immediately next to the square fence (SQ). This is possible thanks to the fact that the closing devices 200A, 200B, 200C, 200D can coexists with the upper surface (SS) of the working table 100 or, in any case and more in particular, also with a portion of the upper surface (SS) of the strips (212), which is substantially affected by the pressing action exerted by the pressing unit (PRR) and acts as an indispensable support for the panels during the cutting phase.

Actually, also the heads 201 B*, 201 B**, 201 B***, 201 B**** of the closing members or, in any case, the mobile end portions of the devices suited to close the cutting slot (FT) can coexists, along the equipped working table 100, with the corresponding areas (A*), (A**), (A***), (A****) of the upper surface (SS) of the special strips 212, which are substantially affected by the pressing force of the pressing unit (PRR), since they do not interfere with one another (figure 5).

According to a further embodiment (not shown) of the present invention, the closing member substantially remains unchanged with respect to the previous embodiments, while the actuating device, instead of being completely mechanical (as in the first embodiment described with reference to figures 1-10), comprises electro-pneumatic actuators (electronically activated as a function of the position and of the cycle phase of the saw carriage (CRR)), which directly act according to the directions represented by arrows F3, F4, though keeping the same operative conditions as described above.

A variation on the embodiment described above (not shown) involves electro-pneumatic actuators, which act, according to the directions represented by arrows F1, F2, on a mechanism, which is able to change this movement into a movement according to the directions represented by arrows F3, F4.

In another embodiment (not shown) it is possible to provide the same described solutions applied to a continuous equipped working table 100 without grooves, where the pressing area (A) of the upper pressing unit (PRR) on upper surface (SS) of the equipped working table 100, is always arranged in correspondence of closing devices (200), or in any case of the head (201 B) of closing member (201) of cutting slot (FT).

The main advantages of the cutting machine described above are as follow:
- the different closing devices can be arranged in any position along the cutting line and, therefore, also in the equipped working table portions interposed between the several grooves provided for the grippers suited to clamp the panels, thus solving the problem caused by really short off-cuts falling into the cutting machine, especially in the area next to the square fence, where the grooves are generally more numerous; and
- the upper surface of the equipped working table, even in the presence of cutting slot closing devices that are arranged between the several grooves provided for the grippers suited to clamp the panels, guarantees a perfect support immediately next to the cutting slot itself and, therefore, guarantees an optimal panel clamping during the cutting operation, thus ensuring a perfect cutting quality and a perfect sizing of the cut panels.

## Claims

1. A cutting machine (10) comprising:
- a support structure (11), which is provided with an equipped working table (100);
- a saw carriage (CRR), which comprises at least one circular blade (SC), which is suited to run, during the panel cutting operation, along a cutting slot (FT), which is obtained on said working table (100);
- at least one pressing unit (PRR), which acts on the panels to be cut on at least one side of said cutting slot (FT); and
- the working table (100) comprising at least one closing device (200), (200A), (200B), (200C), (200D) for closing the cutting slot (FT), so as to prevent off-cuts from dropping therein; said closing device comprising at least one closing member (201), which is orthogonal to the cutting slot (FT) itself;
- the at least one closing device (200), (200A), (200B), (200C), (200D) for closing the cutting slot (FT) being operated during the cutting operation and while the pressing unit (PRR) acts on the panels under cutting;
the cutting machine (10) being **characterized by** comprising:
- a pressing area (A), (A*), (A**), (A***), (A****) arranged next to the cutting slot (FT), onto which a force (F), substantially exerted by the pressing unit (PRR), is applied for clamping the panels during the cutting phase;
- said pressing area (A), (A*), (A**), (A***), (A****) being comprised in the upper surface (SS) of a portion of the equipped working table (100);
- said portion of said equipped working table (100) comprising said pressing area (A), (A*), (A**), (A***), (A****) is housing and/or guiding at least one portion of said closing device (200), (200A), (200B), (200C), (200D) for closing the cutting slot (FT).

2. A cutting machine (10) according to claim 1, **characterized in that** said portion of the equipped working table (100) which houses and/or guides at least one portion of said closing device (200), (200A), (200B), (200C), (200D) for closing the cutting slot (FT), is arranged between two grooves (SCN), which are provided on said equipped working table (100).

3. A cutting machine (10) according to any of the preceding claims, **characterized in that** said portion of said equipped working table (100) which houses and/or guides at least one portion of said closing device (200), (200A), (200B), (200C), (200D) for closing the cutting slot (FT), has the shape of a strip (212).

4. A cutting machine (10) according to claim 3, **characterized in that** said strip (212), which houses and/or guides at least one portion of said closing device (200), (200A), (200B), (200C), (200D) for closing the cutting slot (FT), is arranged between two adjacent grooves (SCN), which are provided on said working table (100) for the passage of the bottom fingers ((AP), (AP1), (AP2)) belonging to panel clamping grippers ((PZ1), (PZ2), (PZ3),...(PZn)),

5. A cutting machine (10) according to any of the preceding claims, **characterized in that** the closing member (201) is at least partially contained in a slot (CV), which is obtained on the inside of said equipped working table (100) and/or of said strip (212) which is part of the equipped working table (100).

6. A cutting machine (10) according to claim 5, **characterized in that** the closing member (201) is completely contained in a slot (CV), which is obtained on the inside of said equipped working table (100) and/or of said strip (212) which is part of the equipped working table (100).

7. A cutting machine (10) according to any of the preceding claims 3-6, **characterized in that** the closing member (201) is at least partially guided in said strip (212), which is part of the equipped working table (100).

8. A cutting machine (10) according to claim 7, **characterized in that** the closing member (201) is completely guided in said strip (212), which is part of the equipped working table (100).

9. A cutting machine (10) according to any of the preceding claims, **characterized in that** said upper surface (SS) of said strip (212) supporting the panel or the stack of panels is at least partially arranged over a head (201B), (201B*), (201B**), (201B***), (201B****) of said closing member (201) when the closing member (201) itself is arranged in a retracted position (PRT).

10. A cutting machine (10) according to claim 9, **characterized in that** said upper surface (SS) of said strip (212) supporting the panel or the stack of panels is completely arranged over a head (201B), (201B*), (201B**), (201B***), (201B****) of said closing member (201) when the closing member (201) itself is arranged in a retracted position (PRT).

11. A cutting machine (10) according to claim 9 or to claim 10 **characterized in that** said head (201B), (201B*), (201B**), (201B***), (201B****) of said closing member (201), when it is arranged in its extracted position (PET), is substantially arranged at the same level as the upper surface (SS) of said equipped working table (100).

12. A cutting machine (10) according to any of the preceding claims 9 - 11 **characterized in that** the width (D2) of the head (201B), (201B*), (201B**), (201B***), (201B****) of said closing member (201) is wider than the relative main body (201A) or of the relative actuating device (202).

13. A cutting machine (10) according to any of the preceding claims 9 - 12, **characterized in that** the width (D2) of the head (201B), (201B*), (201B**), (201B***), (201B****) of said closing member (201) is substantially equal or larger than the width (D3) of said strip (212) that houses and/or guides the relative closing member (201) or the entire closing device (200), (200A), (200B), (200C), (200D).

14. A cutting machine (10) according to any of the preceding claims, **characterized in that** said closing member (201) is made of a deformable elastic foil.

15. A cutting machine (10) according to any of the preceding claims, **characterized in that** each specific closing member (201) is arranged in its corresponding retracted position (PRT) only when the two following conditions are simultaneously met:
f1) the cutting means (INC, SC) are cutting phase a panel or a stack of panels; and
f2) said cutting means (INC, SC) are exactly in correspondence to that specific closing member (201).

## Patentansprüche

1. Schneidmaschine (10), die aufweist:
- eine Stützstruktur (11), die mit einem ausgestatteten Arbeitstisch (100) versehen ist;
- einen Sägeschlitten (CRR), der wenigstens ein Kreissägeblatt (SC) aufweist und geeignet ist, während des Plattenschneidvorgangs entlang eines Schneidschlitzes (FT) zu gleiten, der in dem Arbeitstisch (100) enthalten ist;
- wenigstens eine Presseinheit (PRR), die auf die zu schneidenden Platten an wenigstens einer Seite des Schneidschlitzes (FT) wirkt; und
- wobei der Arbeitstisch (100) wenigstes eine Schließvorrichtung (200), (200A), (200B), (200C), (200D) aufweist, um den Schneidschlitz (FT) zu verschließen, um zu verhindern, dass Verschnitt hineinfällt; wobei die Schließvorrichtung wenigstens ein Schließelement (201) aufweist, das orthogonal zu dem Schneidschlitz (FT) selbst ist;
- wobei die wenigstens eine Schließvorrichtung (200), (200A), (200B), (200C), (200D) zum Schließen des Schneidschlitzes (FT) während des Schneidvorgangs betrieben wird und während die Presseinheit (PRR) auf die Platten, die geschnitten werden, wirkt;
wobei die Schneidmaschine (10) **dadurch gekennzeichnet ist, dass** sie aufweist:
- einen Druckbereich (A), (A*), (A**), (A***), (A****), der neben dem Schneidschlitz (FT) angeordnet ist, und auf den eine Kraft (F), die im Wesentlichen durch die Presseinheit (PRR) ausgeübt wird, zum Klemmten der Platten während der Schneidphase aufgebracht wird;
- wobei der Druckbereich (A), (A*), (A**), (A***), (A****) in der oberen Fläche (SS) eines Abschnitts des ausgestatteten Arbeitstisches (100) enthalten ist;
- wobei der Abschnitt des ausgestatteten Arbeitstisches (100), der den Druckbereich (A), (A*), (A**), (A***), (A****) enthält, wenigstens einen Abschnitt der Schließvorrichtung (200), (200A), (200B), (200C), (200D) aufnimmt und/oder führt, um den Schneidschlitz (FT) zu schließer.

2. Schneidmaschine (10) nach Anspruch 1, **dadurch gekennzeichnet, dass** der Abschnitt des ausgestatteten Arbeitstisches (100), der wenigstens einen Abschnitt der Schließvorrichtung (200), (200A), (200B), (200C), (200D) aufnimmt und/oder führt, um den Schneidschlitz (FT) zu schließen, zwischen zwei Nuten (SCN) angeordnet ist, die an dem ausgestatteten Arbeitstisch (100) vorgesehen sind.

3. Schneidmaschine (10) nach einem der vorhergehenden Ansprüche, **dadurch gekennzeichnet, dass** der Abschnitt des ausgestatteten Arbeitstisches (100), der wenigstens einen Abschnitt der Schließvorrichtung (200), (200A), (200B), (200C), (200D) aufnimmt und/oder führt, um den Schneidschlitz (FT) zu schließen, die Form eines Streifens (212) hat.

4. Schneidmaschine (10) nach Anspruch 3, **dadurch gekennzeichnet, dass** der Streifen (212), der wenigstens einen Abschnitt der Schließvorrichtung (200), (200A), (200B), (200C), (200D) aufnimmt und/oder führt, um den Schneidschlitz (FT) zu schließen, zwischen zwei benachbarten Nuten (SCN) angeordnet ist, die an dem Arbeitstisch (100) zum Durchgang der unteren Finger ((AP), (AP1), (AP2)), die zu Plattenklemmgreifern ((PZ1), (PZ2), (PZ3),... (PZn)) gehören, vorgesehen sind.

5. Schneidmaschine (10) nach einem der vorhergehenden Ansprüche, **dadurch gekennzeichnet, dass** das Schließelement (201) wenigstens teilweise in einem Schlitz (CV) enthalten ist, der an der Innenseite des ausgestatteten Arbeitstisches (100) und/oder des Streifens (212), der Teil des ausgestatteten Arbeitstisches (100) ist, angebracht ist.

6. Schneidmaschine (10) nach Anspruch 5, dadurch gekenntzeichnet, dass das Schließelement (201) vollständig in einem Schlitz (CV) enthalten ist, der an der Innenseite des ausgestatteten Arbeitstisches (100) und/oder des Streifens (212), der Teil des ausgestatteten Arbeitstisches (100) ist, angebracht ist.

7. Schneidmaschine (10) nach einem der vorhergehenden Ansprüche 3 bis 6, **dadurch gekennzeichnet, dass** das Schließelement (201) wenigstens teilweise in dem Streifen (212) geführt wird, der Teil des ausgestatteten Arbeitstisches (100) ist.

8. Schneidmaschine (10) nach Anspruch 7, **dadurch gekennzeichnet, dass** das Schließelement (201) vollständig in dem Streifen (212) geführt wird, der Teil des ausgestatteten Arbeitstisches (100) ist.

9. Schneidmaschine (10) nach einem der vorhergehenden Ansprüche, **dadurch gekennzeichnet, dass** die obere Fläche (SS) des Streifens (212), die die Platte oder den Plattenstapel trägt, wenigstens teilweise über einem Kopf (201B), (201B*), (201B**), (201B***), (201B****) des Schließelements (201) angeordnet ist, wenn das Schließelement (201) selbst in einer zurückgezogenen Position (PRT) angeordnet ist.

10. Schneidmaschine (10) nach Anspruch 9, **dadurch gekennzeichnet, dass** die obere Fläche (SS) des Streifens (212), die die Platte oder den Plattenstapel trägt, vollständig über einem Kopf (201B), (201B*), (201B**), (201B***), (201B****) des Schließelements (201) angeordnet ist, wenn das Schließelement (201) selbst in einer zurückgezogenen Position (PRT) angeordnet ist.

11. Schneidmaschine (10) nach Anspruch 9 oder nach Anspruch 10, **dadurch gekennzeichnet, dass** der Kopf (201B), (201B*), (201B**), (201B***), (201B****) des Schließelements (201), wenn es in der zurückgezogenen Position (PET) angeordnet ist, im Wesentlichen auf derselben Ebene angeordnet ist wie die obere Fläche (SS) des ausgestatteten Arbeitstisches (100).

12. Schneidmaschine (10) nach einem der vorhergehenden Ansprüche 9 bis 11, **dadurch gekennzeichnet, dass** die Breite (D2) des Kopfs (201B), (201B*), (201B**), (201B***), (201B****) des Schließelements (201) breiter ist, als der relative Hauptkörper (201 A) oder die relative Betätigungsvorrichtung (202).

13. Schneidmaschine (10) nach einem der vorhergehenden Ansprüche 9 bis 12, **dadurch gekennzeichnet, dass** die Breite (D2) des Kopfs (201B), (201B*), (201B**), (201B***), (201B****) des Schließelements (201) im Wesentlichen gleich oder größer ist als die Breite (D3) des Streifens (212), der das relative Schließelement (201) oder die gesamte Schließvorrichtung (200), (200A), (200B), (200C), (200D) aufnimmt und/oder führt.

14. Schneidmaschine (10) nach einem der vorhergehenden Ansprüche, **dadurch gekennzeichnet, dass** das Schließelement (201) aus einer verformbaren elastischen Folie hergestellt ist.

15. Schneidmaschine (10) nach einem der vorhergehenden Ansprüche, **dadurch gekennzeichnet, dass** jedes spezifische Schließelement (201) nur dann in seiner entsprechenden zurückgezogenen Position (PRT) angeordnet ist, wenn gleichzeitig die beiden folgenden Bedingungen erfüllt sind:
f1) die Schneidmittel (INC, SC) sind in der Schneidphase einer Platte oder eines Plattenstapels; und
f2) die Schneidmittel (INC, SC) sind exakt in Übereinstimmung mit dem spezifischen Schließelement (201).

## Revendications

1. Machine de coupe (10) comprenant :
- une structure de support (11), qui est dotée d'une table de travail équipée (100) ;
- un chariot porte-scie (CRR), qui comprend au moins une lame circulaire (SC), qui est adaptée pour s'étendre, au cours de l'opération de coupe de panneaux, le along d'une fente de coupe (FT), qui est obtenue sur ladite table de travail (100) ;
- au moins une unité de presse (PRR), qui agit sur les panneaux devant être coupés sur au moins un côté de ladite fente de coupe (FT) ; et
- la table de travail (100) comprenant au moins un dispositif de fermeture (200), (200A), (200B), (200C), (200D) destiné à fermer la fente de coupe (FT), de sorte à empêcher les chutes de tomber à l'intérieur ; ledit dispositif de fermeture comprenant au moins un élément de fermeture (201), qui est orthogonal à la fente de coupe (FT) elle-même ;
- l'au moins un dispositif de fermeture (200), (200A), (200B), (200C), (200D) destiné à fermer la fente de coupe (FT) étant actionné au cours de l'opération de coupe et tandis que l'unité de presse (PRR) agit sur les panneaux faisant l'objet de la coupe ;
la machine de coupe (10) étant **caractérisée en ce qu'**elle camprend :
- une surface de presse (A), (A*), (A**), (A***), (A****) agencée près de la fente de coupe (FT), sur laquelle une force (F), exercée sensiblement par l'unité de presse (PRR), est appliquée pour bloquer les panneaux au cours de la phase de coupe ;
- ladite zone de presse (A), (A*), (A**), (A***), (A****) étant comprise dans la surface supérieure (SS) d'une partie de la table de travail équipée (100) ;
- ladite partie de ladite table de travail équipée (100) comprenant ladite surface de presse (A), (A*), (A**), (A***), (A****) loge et/ou guide au moins une partie dudit dispositif de fermeture (200), (200A), (200B), (200C), (200D) destiné à fermer la fente de coupe (FT).

2. Machine de coupe (10) selon la revendication 1, **caractérisée en ce que** ladite partie de la table de travail équipée (100) qui loge et/ou guide au moins une partie dudit dispositif de fermeture (200), (200A), (200B), (200C), (200D) destiné à fermer la fente de coupe (FT), est agencée entre deux gorges (SCN), qui sont placées sur ladite table de travail équipée (100).

3. Machine de coupe (10) selon l'une quelconque des revendications précédentes, **caractérisée en ce que** ladite partie de ladite table de travail équipée (100) qui loge et/ou guide au moins une partie dudit dispositif de fermeture (200), (200A), (200B), (200C), (200D) destiné à fermer la fente de coupe (FT), a la forme d'une bande (212).

4. Machine de coupe (10) selon la revendication 3, **caractérisée en ce que** ladite bande (212), qui loge et/ou guide au moins une partie dudit dispositif de fermeture (200), (200A), (200B), (200C), (200D) destiné à fermer la fente de coupe (FT), est agencée entre deux gorges adjacentes (SCN), qui sont placées sur ladite table de travail (100) pour le passage des doigts inférieurs ((AP), (AP1), (AP2)) appartenant aux préhenseurs de blocage de panneau ((PZ1), (PZ2), (PZ3), ...(PZn)).

5. Machine de coupe (10) selon l'une quelconque des revendications précédentes, **caractérisée en ce que** l'élément de fermeture (201) est au moins partiellement contenu dans une fente (CV), qui est obtenue sur l'intérieur de ladite table de travail équipée (100) et/ou de ladite bande (212) qui fait partie de la table de travail équipée (100).

6. Machine de coupe (10) selon la revendication 5, **caractérisée en ce que** l'élément de fermeture (201) est complètement contenu dans une fente (CV), qui est obtenue sur l'intérieur de ladite table de travail équipée (100) et/ou de ladite bande (212) qui fait partie de la table de travail équipée (100).

7. Machine de coupe (10) selon l'une quelconque des revendications 3 à 6 précédentes, **caractérisée en ce que** l'élément de fermeture (201) est au moins partiellement guidé dans ladite bande (212), qui fait partie de la table de travail équipée (100).

8. Machine de coupe (10) selon la revendication 7, **caractérisée en ce que** l'élément de fermeture (201) est complètement guidé dans ladite bande (212), qui fait partie de la table de travail équipée (100).

9. Machine de coupe (10) selon l'une quelconque des revendications précédentes, **caractérisée en ce que** ladite surface supérieure (SS) de ladite bande (212) supportant le panneau ou la pile de panneaux est au moins partiellement agencée sur une tête (201B), (201B*), (201B**), (201B***), (201B****) dudit élément de fermeture (201) lorsque l'élément de fermeture (201) lui-même est agencé dans une position rentrée (PRT).

10. Machine de coupe (10) selon la revendication 9, **caractérisée en ce que** ladite surface supérieure (SS) de ladite bande (212) supportant le panneau ou la pile de panneaux est complètement agencée sur une tête (201B), (201B*), (201B**), (201B***), (201B****) dudit élément de fermeture (201) lorsque l'élément de fermeture (201) lui-même est agencé dans une position rentrée (PRT).

11. Machine de coupe (10) selon la revendication 9 ou la revendication 10, **caractérisée en ce que** ladite tête (201B), (201B*), (201B**), (201B***), (201B****) dudit élément de fermeture (201), lorsqu'elle est agencée dans sa position sortie (PET), est sensiblement agencée au même niveau que la surface supérieure (SS) de ladite table de travail équipée (100).

12. Machine de coupe (10) selon l'une quelconque des revendications 9 à 11 précédentes, **caractérisée en ce que** la largeur (D2) de la tête (201 B), (201B*), (201B**), (201B***), (201B****) dudit élément de fermeture (201) est plus large que le corps principal respectif (201 A) ou que le dispositif d'actionnement respectif (202).

13. Machine de coupe (10) selon l'une quelconque des revendications 9 à 12 précédentes, **caractérisée en ce que** la largeur (D2) de la tête (201B), (201B*), (201B**), (201B***), (201B****) dudit élément de fermeture (201) est sensiblement supérieure ou égale à la largeur (D3) de ladite bande (212) qui loge et/ou guide l'élément de fermeture respectif (201) ou le dispositif de fermeture dans son ensemble (200), (200A), (200B), (200C), (200D).

14. Machine de coupe (10) selon l'une quelconque des revendications précédentes, **caractérisée en ce que** ledit élément de fermeture (201) est composé d'une feuille élastique déformable.

15. Machine de coupe (10) selon l'une quelconque des revendications précédentes, **caractérisée en ce que** chaque élément de fermeture spécifique (201) n'est agencé dans sa position rentrée correspondante (PRT) que lorsque les deux conditions suivantes sont remplies simultanément :
f1) les moyens de coupe (INC, SC) sont la phase de coupe d'un panneau ou d'une pile de panneaux ; et
f2) lesdits moyens de coupe (INC, SC) sont exactement en correspondance avec cet élément de fermeture spécifique (201).
